# EUROPÄISCHE PATENTSCHRIFT

(11) **EP 1 338 776 B1**
(45) Veröffentlichungstag und Bekanntmachung des Hinweises auf die Patenterteilung: **03.05.2006**
(21) Anmeldenummer: 02100156.5
(22) Anmeldetag: 20.02.2002
(51) Int. Cl.: F02D 13/02

(54) **Viertakt-Ottomotor mit separat verstellbaren Nockenwellen sowie Steuerungsverfahren**
Four stroke spark ignition engine with separate variable camshafts and method therefor
Moteur à quatre temps à allumage commandé avec deux arbres à cames à phase variable et sa méthode de commande

(43) Veröffentlichungstag der Anmeldung: 27.08.2003
(73) Patentinhaber: Ford Global Technologies, LLC, Dearborn, MI 48126 (US)
(72) Erfinder: Phlips, Patrick Joseph Dr., 50858, Koeln (DE)
(74) Vertreter: Drömer, Hans-Carsten

(56) Entgegenhaltungen:
- EP-A- 0 859 130
- EP-A- 1 001 141
- EP-A- 1 167 734
- DE-A- 19 950 677
- US-A- 5 233 948
- US-A- 5 682 854
- US-A- 5 950 582
- US-A1- 2002 013 653
- US-B1- 6 276 334
- PATENT ABSTRACTS OF JAPAN vol. 1999, no. 13, 30. November 1999 (1999-11-30) & JP 11 223137 A (NISSAN MOTOR CO LTD), 17. August 1999 (1999-08-17)
- LINGEN C ET AL: "Efficiency of an Atkinson engine at maximum power density" ENERGY CONVERSION AND MANAGEMENT, ELSEVIER SCIENCE PUBLISHERS, OXFORD, GB, Bd. 39, Nr. 3-4, 3. Februar 1998 (1998-02-03), Seiten 337-341, XP004165751 ISSN: 0196-8904

## Beschreibung

Die Erfindung betrifft einen Viertakt-Ottomotor mit mindestens einer Nockenwelle für die Einlaßventile und mindestens einer Nockenwelle für die Auslaßventile, wobei die Nockenwellen jeweils eine Verstelleinrichtung zur Phasenverschiebung aufweisen. Ferner betrifft die Erfindung ein Verfahren zur Steuerung eines derartigen Viertakt-Ottomotors.

In Automobilen verwendete Brennkraftmaschinen mit Fremdzündung ("Ottomotoren") werden hauptsächlich mit einer stöchiometrischen Luft-Kraftstoff-Mischung betrieben, welche eine sehr effiziente Nachbehandlung der Emissionen und eine Drosselung zur Lastregelung erlaubt. Als Kraftstoff wird dabei fast ausschließlich Benzin verwendet. Die bei diesen Motoren mit der Drosselung und dem stöchiometrischen Betrieb bei Teillast verbundenen Kraftstoffverluste können durch einen mageren Betrieb verringert werden. Dieser magere Betrieb kann entweder vom Typ homogen oder vom Typ geschichtet mit Direktinjektion sein. In beiden Fällen können die den Motor verlassenden NOₓ-Emissionen nicht durch einen herkömmlichen Dreiwegekatalysator behandelt werden. Aus diesem Grunde sind Magerbetrieb-NOₓ-Fallen (LNT) entwickelt worden, durch welche magere Abgase behandelt werden können. Ein Nachteil derartiger, auf Magerbetrieb-NOₓ-Fallen basierender Systeme besteht darin, daß diese sehr viel teurer als Systeme mit herkömmlichen Dreiwegekatalysatoren sind.

Diesbezüglich konnte vor kurzem ein magerer Motorbetrieb mit extrem geringen NOₓ-Emissionen demonstriert werden, bei welchem ein teures NOₓ₋Nachbehandlungssystem überflüssig ist. Ein derartiger Betrieb wurde durch eine kontrollierte Selbstzündung erreicht (vgl. Oakley et al.: Experimental Studies on Controlled Auto-Ignition (CAI) Combustion of Gasoline in a 4-Stroke Engine, SAE Technical Paper 2001-01-1030; Law et al.: Controlled Combustion in an IC-Engine with a Fully Variable Valvetrain, SAE Technical Paper 2001-01-0251). In beiden Fällen wurden Ventil-Zeitsteuerungen verwendet, die zu einem hohen Anteil von Restgasen im Motor führen. Die Erzeugung einer derartigen Ventil-Zeitsteuerung mit fest eingestellten Nockenwellen ermöglicht jedoch den Betrieb des Motors nur in einem engen Drehzahl/Lastbereich. Der Einsatz elektromagnetischer Einlaß-und Auslaßventile, welche sehr variabel angesteuert werden können, ist dagegen verhältnismäßig teuer und daher für viele Fahrzeugtypen nicht realisierbar.

Bei der unabhängigen Verstellung zweier Nockenwellen handelt es sich um eine bekannte Technologie, die zunehmend bei der Produktion von Benzinmotoren mit doppelten obenliegenden Nockenwellen eingesetzt wird. Die variable Nockenwellensteuerung erhöht die Leistungsfähigkeit bei Vollast und verringert die Motoremissionen und den Kraftstoffverbrauch. Eine Strategie zur Phasensteuerung derartiger Nockenwellen wird bei Phlips et al. erläutert ("Entwicklungspotential von kleinvolumigen Ottomotoren mit Saugrohreinspritzung und Doppel-Nockenwellenverstellung", 22. Internationales Wiener Motorensymposium, 26.-27. April 2001). Der Kraftstoffverbrauch bei Teillast wird durch Hinzufügung von verdünnendem Gas zur Mischung und durch Erhöhung des effektiven Kompressionsverhältnisses verbessert. Dies wird erreicht durch eine Spätverstellung der Auslaß-Nockenwelle und eine Frühverstellung der Einlaß-Nockenwelle, wodurch eine hohe Überschneidung für eine interne Abgasrückführung und ein frühes Schließen der Einlaßventile für ein erhöhtes Kompressionsverhältnis resultiert. Die Einschränkungen eines derartigen Verfahrens bestehen jedoch darin, daß die Verbesserung der Kraftstoffausnutzung auf die untere Hälfte des Lastbereiches konzentriert ist.

Darüber hinaus ist eine als "Atkinsonzyklus" bezeichnete Steuerungstechnik bekannt, durch welche die Motoreffizienz über ein größeres Expansionsverhältnis als Kompressionsverhältnis insbesondere bei höheren Lasten gesteigert werden kann. Eine Definition und Analyse eines Otto-Atkinsonzykluses, der ein variables Schließen der Einlaßventile und ein veränderliches Brennkammervolumen erfordert, findet sich bei Luria et al. (The Otto-Atkinson engine, a new concept in automotive economy, SAE Technical Paper 820352) und Boggs et al. (The Otto-Atkinson engine - Fuel Economy and Emission Results and Hardware Design, SAE Technical Paper 950089). In der einfachsten Form erfordert der Atkinsonzyklus nur ein erhöhtes Kompressionsverhältnis und ein spätes Schließen der Einlaßventile (vgl. Blakey, S., et al., "A Design and Experimental Study of an Otto Atkinson Cycle Engine Using Late Intake Valve Closing", SAE Technical Paper 910451). In der Praxis werden dabei häufig zusätzliche Konstruktionsänderungen auf der Einlaßseite des Motors vorgenommen, um eine optimale Drehmomentkurve des Motors bei Vollast zu erhalten.

Aus der US 5 233 948 ist eine Brennkraftmaschine mit separat phasenverschiebbaren Nockenwellen für die (sekundären) Einlassventile und die Auslassventile bekannt, welche bei Volllast in einem Ottozyklus und bei Teillast in einem Atkinsonzyklus betrieben wird, wobei der Atkinsonzyklus durch eine Spätverstellung der Einlass-Nockenwelle erzielt wird. Weiterhin wird der Verdichtungsraum der Brennkraftmaschine variiert, um eine drosselfreie Steuerung des Motors zu erreichen.

Die EP 1 001 141 A2 betrifft ein Verfahren zur Steuerung einer fremdgezündeten Brennkraftmaschine, wobei Einlassventile und Auslassventile von einer gemeinsamen Nockenwelle betätigt werden. Charakteristisch ist dabei eine Spätverstellung von Einlass und Auslass im Teillastbetrieb.

Aus der US 5 682 854 ist ein Viertakt-Ottomotor bekannt, der bei hohen Motorlasten im Atkinsonzyklus und bei Teillast im Ottozyklus betrieben wird. Dabei werden zwei Auslassventile und ein Einlassventil von einer ersten, nicht verstellten Nockenwelle betätigt, während für ein weiteres Einlassventil eine separate, phasenverstellbare Nockenwelle bereitgestellt werden muss.

Die DE 199 50 677 A1 betrifft eine Brennkraftmaschine, bei welcher die Öffnungs-und Schließzeiten der Auslassventile unabhängig voneinander verstellt werden.

Die EP 1 167 734 A2 offenbart eine Brennkraftmaschine, welche mit Selbstzündung betrieben werden kann, wobei zur Bereitstellung entsprechender Bedingungen Kraftstoff nach einem speziellen Programm injiziert wird. Die Einlass- und Auslassventile der Brennkraftmaschine werden über einzelne Aktuatoren betätigt.

Die US 6 276 334 B1 betrifft ebenfalls den Betrieb einer Brennkraftmaschine mit Selbstzündung, wobei eine Vormischung eines zündfähigen Gemisches stattfindet. Zur Steuerung der Selbstzündung wird ein aufwändiger Mechanismus vorgeschlagen, mit dem die Temperatur des Luft-Kraftstoff-Gemisches geregelt wird. Die optionale Betriebsmöglichkeit der Brennkraftmaschine im Atkinson- bzw. Millerzyklus wird zwar erwähnt, es werden jedoch keinerlei Einzelheiten hierzu erläutert.

Vor diesem Hintergrund bestand eine Aufgabe der vorliegenden Erfindung darin, einen kostengünstig zu realisierenden Viertakt-Ottomotor sowie ein Verfahren zu seiner Steuerung bereitzustellen, wobei die Stickoxid-Emissionen des Motors gering gehalten werden sollen.

Diese Aufgabe wird durch einen Viertakt-Ottomotor mit den Merkmalen des Anspruchs 1 sowie durch ein Verfahren mit den Merkmalen des Anspruchs 7 gelöst.

Vorteilhafte Ausgestaltungen sind in den Unteransprüchen enthalten.

Der erfindungsgemäße Viertakt-Ottomotor weist mindestens eine Nockenwelle für die Einlaßventile und mindestens eine Nockenwelle für die Auslaßventile auf. Die beiden genannten Nockenwellen weisen dabei jeweils eine Verstelleinrichtung zur Phasenverschiebung auf, mit deren Hilfe diese unabhängig voneinander in Frühverstellung oder Spätverstellung gebracht werden können. Der Ottomotor ist ferner derart eingerichtet, daß dieser im Zustand der Spätverstellung der Nockenwelle der Einlaßventile ("Einlaß-Nockenwelle") im Atkinsonzyklus arbeitet.

Mit einem derartigen Motor lassen sich die Vorteile des Atkinsonzyklus erzielen, d. h. eine Steigerung der Motoreffizienz bei höheren Lasten, wobei lediglich verhältnismäßig kostengünstig zu realisierende Nockenwellen eingesetzt werden.

Im Rahmen der erfindungsgemäßen Ausgestaltung des Ottomotors weist dieser im Atkinsonzyklus ein im Vergleich zu einem herkömmlichen Motor mit Fremdzündung erheblich erhöhtes Kompressionsverhältnis auf, welches typischerweise über 12 : 1 liegt. Die Verdichtung ist also um etwa zwei Einheiten bzw. 20% höher.

Ferner ist der Viertakt-Ottomotor vorzugsweise derart eingerichtet, daß das Einlaßventil im Zustand der Spätverstellung der zugehörigen Nockenwelle im Vergleich zu einem herkömmlichen Motor mit Fremdzündung und Spätverstellung der Einlaßventile (besonders) spät geschlossen wird. Beim herkömmlichen Motor liegt das spätverstellte Ereignis "Einlaß schließt" (gemessen bei 1 mm Hub) bei 20-40° Kurbelwellenwinkel nach dem unteren Totpunkt. Erfindungsgemäß liegt dies etwa 40° später, also zwischen 60° und 80° Kurbelwellenwinkel nach dem unteren Totpunkt BDC des Kolbens.

Ferner wird das Einlaßventil im Zustand der Spätverstellung der zugehörigen Nokkenwelle vorzugsweise wie herkömmlich in der Nähe des oberen Totpunktes TDC des Kolbens gegen Ende des Ausstoßtaktes geöffnet.

Darüber hinaus kann der erfindungsgemäße Ottomotor derart ausgestaltet sein, daß dieser bei hohen Drehzahlen einen verringerten Füllungsgrad aufweist. Dabei kann zur Erreichung dieses Zieles insbesondere der Hub und/oder der Durchmesser des Einlaßventils reduziert, der effektive Durchmesser des Einlaßkanals reduziert, der effektive Durchmesser des Laufrades der Turbine eines Turboladers reduziert und/oder das Einlaßventil maskiert sein. Unter einer Maskierung des Einlaßventils wird in diesem Zusammenhang eine spezielle, hochstehende Formgebung des Randes um das Einlaßventil im Inneren des Zylinders verstanden, wie sie z. B. in der US 5 950 582 beschrieben ist. Durch die genannten konstruktiven Maßnahmen zur Reduktion des Füllungsgrades wird die mit der erfindungsgemäßen Ansteuerung der Nockenwelle verbundene Erhöhung des Füllungsgrades bei hohen Drehzahlen wieder kompensiert.

Weiterhin kann der Viertakt-Ottomotor ein Abgasrückführungssystem aufweisen, über welches Abgase vom Auslaßkrümmer zum Ansaugkrümmer in kontrollierter Weise rückgeführt werden können. Mit einem derartigen Abgasrückführungssystem kann zusätzlich zur internen Abgasrückführung der Anteil der Restgase im Zylinder erhöht werden, was sich auf den nachstehend zu erläuternden Betrieb mit kontrollierter Selbstzündung positiv auswirkt.

Gemäß einer bevorzugten Ausgestaltung weist der Viertakt-Ottomotor eine Motorsteuerung auf, welche mit den Verstelleinrichtungen der Nockenwellen gekoppelt und dazu eingerichtet ist, durch Veränderung der Phasenverschiebung der Nockenwellen den Motor wahlweise in einem Atkinsonzyklus mit Funkenzündung oder mit kontrollierter Selbstzündung zu betreiben. Eine derartige Motorsteuerung ermöglicht einen optimalen Betrieb des Ottomotors über einen breiten Bereich von Drehzahlen und Lasten. Von besonderem Vorteil ist dabei, daß durch den Betrieb mit kontrollierter Selbstzündung die NOₓ-Emissionen des Motors so gering gehalten werden können, daß auf eine zusätzliche, teure NOₓ-Falle verzichtet werden kann.

Die Erfindung betrifft ferner ein Verfahren zur Steuerung eines Viertakt-Ottomotors der vorstehend erläuterten Art, welcher für die Einlaß- und Auslaßventile jeweils mindestens eine Nockenwelle mit jeweils einer Verstelleinrichtung aufweist. Das Verfahren ist dadurch gekennzeichnet, daß der Ottomotor bei hoher Motorbelastung und vorzugsweise bei weit geöffneter Drosselklappe im Atkinsonzyklus mit verzögertem Schließen des Einlaßventils und mit Funkenzündung betrieben wird. Der Atkinsonzyklus erlaubt es bei hoher Belastung, ein hohes Kompressionsverhältnis im Betrieb mit Funkenzündung auszunutzen, ohne daß ein übermäßiges Klopfen des Motors auftritt. Das verzögerte Schließen des Einlaßventils kompensiert dabei das höhere Kompressionsverhältnis im Kompressionstakt, wodurch ein Klopfen vermieden wird. Ein Vorteil dieses Vorgehens liegt in einem höheren Expansionsverhältnis nach der Verbrennung.

Gemäß einer ersten Weiterbildung des Verfahrens wird der Ottomotor bei mittlerer Belastung mit Frühverstellung der Einlaßventile und Spätverstellung der Auslaßventile sowie mit Funkenzündung betrieben. Ein derartiger Betrieb der Ventile wirkt sich bei Teillast des Motors positiv aus. Bei Teillast entsteht durch die vergrößerte Überschneidung der Öffnungszeiten eine erhöhte interne Abgasrückführung und durch das verfrühte Schließen des Einlaßventils ein höheres effektives Kompressionsverhältnis.

Gemäß einer alternativen Weiterbildung des Verfahrens wird der Ottomotor bei mittlerer Belastung mit Spätverstellung der Einlaßventile und der Auslaßventile sowie mit Funkenzündung betrieben. Durch die Spätstellung der Nockenwelle der Auslaßventile findet eine höhere interne Abgasrückführung statt, welche die Emissionen und den Kraftstoffverbrauch verringert. Ferner bereitet dieser Betrieb den nachfolgend erläuterten bevorzugten Betrieb bei geringer Belastung in zweckmä-βiger Weise vor.

Der bevorzugten Betrieb des Ottomotors bei geringer Belastung besteht in einer Spätverstellung der Auslaßventile, einer Frühverstellung der Einlaßventile und einer kontrollierten Selbstzündung. Wie bereits erläutert wurde, führt die kontrollierte Selbstzündung bei einem mageren Betrieb des Motors zu geringen NOₓ- Emissionen, welche den Einsatz einer NOₓ-Falle überflüssig machen.

Gemäß einer Weiterbildung der zuletzt genannten Verfahrensschritte kann während des Betriebs mit kontrollierter Selbstzündung eine externe Abgasrückführung vorgenommen werden. Hierdurch erhöht sich die Menge an Restgasen im Zylinder, was die kontrollierte Selbstzündung unterstützt.

Die Erfindung wird nachfolgend anhand der Zeichnungen beispielhaft näher erläutert. Es zeigen:
- Fig. 1: den Ventilhub eines Auslaßventils und eines Einlaßventils in Abhängigkeit vom Kurbelwellenwinkel bei einer erfindungsgemäßen Ansteuerung unter Vollast mit Fremdzündung;
- Fig. 2: eine Darstellung entsprechend Figur 1 bei einer erfindungsgemäßen Ansteuerung unter Teillast mit Fremdzündung und interner Abgasrückführung; und
- Fig. 3: eine Darstellung entsprechend den Figuren 1 und 2 bei einer erfindungsgemäßen Ansteuerung bei geringer Last mit kontrollierter Selbstzündung und einem hohen Kompressionsverhältnis oder alternativ bei Teillast mit Fremdzündung.

Die Figuren zeigen die Ansteuerung der Einlaßventile und Auslaßventile eines Viertakt-Ottomotors, welcher erfindungsgemäß wahlweise mit Fremdzündung oder mit kontrollierter Selbstzündung betrieben werden kann. Der Ottomotor weist dabei für die Einlaßventile und die Auslaßventile separate Nockenwellen auf, die jeweils unabhängig voneinander über Verstelleinrichtungen verfügen. In den Figuren ist jeweils auf der vertikalen Achse der Ventilhub des Einlaßventils (Kurven 11, 13, 15, 17) und des Auslaßventils (Kurven 12, 14, 16, 18) über dem Kurbelwellenwinkel aufgetragen. Die gestrichelte Kurve 11 zeigt dabei den "normalen" Betrieb des Auslaßventils zwischen dem Öffnen EVO und Schließen EVC und die gestrichelte Kurve 12 den "normalen" Betrieb des Einlaßventils zwischen dem Öffnen IVO und Schließen IVC bei einem herkömmlichen Ottomotor. Die Kurven 11 und 12 überlappen sich etwas im Bereich um den oberen Totpunkt (TDC) des Kolbens zwischen dem Auslaßtakt und dem Einlaßtakt.

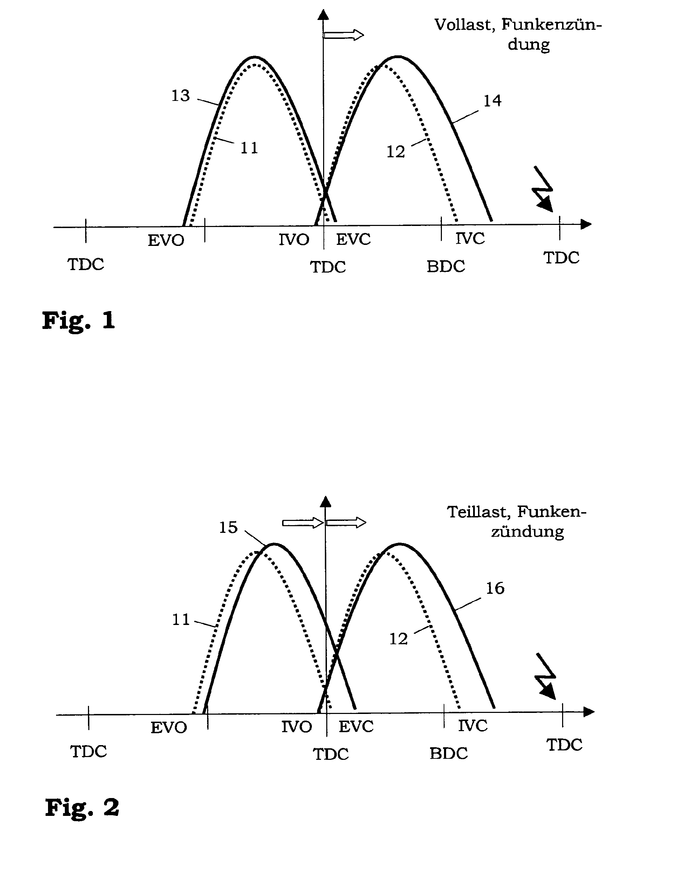

Figur 1 zeigt den erfindungsgemäßen Betrieb der Ventile bei Vollast und hohen Drehzahlen des Motors sowie weit geöffneter Drosselklappe. Während das Auslaßventil entsprechend der Kurve 13 ähnlich wie im Normalbetrieb (Kurve 11) ohne Verstellung betätigt wird, ist die Ansteuerung des Einlaßventils entsprechend der Kurve 14 so ausgelegt, daß sie im Zustand der Spätverstellung ein normales Öffnen des Einlaßventils (IVO) und ein verzögertes Schließen des Einlaßventils (IVC) zeigt. Ein solcher Betrieb mit verzögertem Schließen des Einlaßventils führt zu einem Atkinsonzyklus, welcher gerade bei hohen Motorlasten die Effizienz des Motors erhöht.

Figur 2 zeigt die Ansteuerung der Ventile bei mittleren Motorbelastungen. Im Gegensatz zu Figur 1 wird hierbei die Nockenwelle der Auslaßventile in Spätverstellung gebracht, so daß sich die Kurve 15 für ihr Verhalten ergibt. Die Ansteuerung der Einlaßventile bleibt dagegen unverändert in Spätverstellung entsprechend der Kurve 16. Durch die Spätverstellung der Auslaßventile erhöht sich der Ventilüberlapp und damit die interne Abgasrückführung, was zu einer Verringerung der Emissionen und des Kraftstoffverbrauches führt.

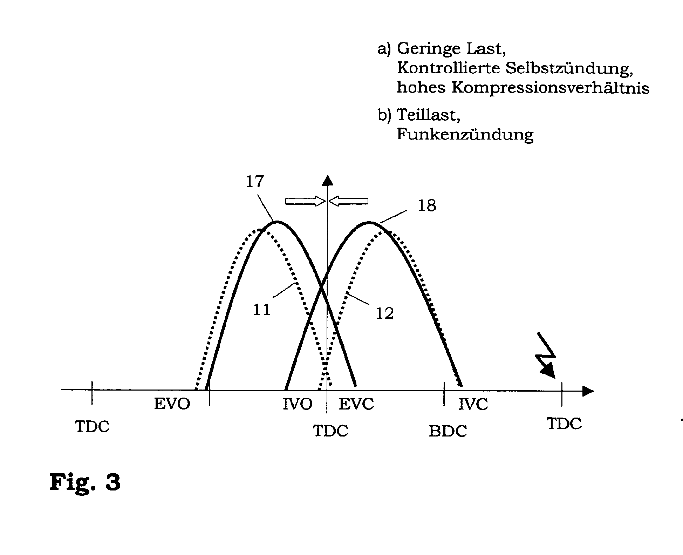

Figur 3 zeigt (in der Variante a)) die Einstellung der Ventile bei geringen Belastungen und kleinen Drehzahlen. In diesem Falle wird abweichend zur Steuerung nach Figur 2 die Nockenwelle der Einlaßventile in Frühverstellung gebracht, was zu der Kurve 18 führt. Die Auslaßventile werden entsprechend der Kurve 17 weiterhin in Spätverstellung betrieben. Durch die Frühverstellung der Einlaßventile erhöht sich die Ventilüberschneidung zusätzlich. Hierdurch steigen die interne Abgasrückführung und das effektive Kompressionsverhältnis, was schließlich dazu führt, daß der Motor im Gegensatz zu den Zuständen der Figuren 1 und 2 nicht mehr mit Fremdzündung (Funkenzündung), sondern mit kontrollierter Selbstzündung bei hohem Kompressionsverhältnis arbeitet. Die erhöhte interne Abgasrückführung und das signifikant über übliche Niveaus erhöhte effektive Kompressionsverhältnis stellen gerade die für eine kontrollierte Selbstzündung notwendige Kombination von Eigenschaften dar. Bei einer derartigen Betriebsweise entstehen auch bei einem mageren Betrieb des Motors nur geringe NOₓ-Emissionen, so daß auf den Einsatz einer entsprechenden Abgasnachbehandlung verzichtet werden kann.

Figur 3 kann - in der Variante b) - jedoch auch als eine alternative Steuerungsmöglichkeit der Ventile bei Teillast gelesen werden. In diesem Falle wird die Nockenwelle der Auslaßventile in Spätstellung gebracht, was zur Kurve 17 führt, und die Nockenwelle der Einlaßventile frühverstellt, was zur Kurve 18 führt. Hierdurch entsteht eine hohe Ventilüberschneidung im Bereich um den oberen Totpunkt TDC zwischen Ausstoßtakt und Ansaugtakt und damit eine höhere interne Abgasrückführung. Das vorgezogene Schließen IVC des Einlaßventils erhöht ferner das effektive Kompressionsverhältnis. Durch die genannten Effekte verbessern sich die Emissionen und der Kraftstoffverbrauch des Motors erheblich.

Die erfindungsgemäße Kombination eines Ottomotors mit doppelten obenliegenden und unabhängig verstellbaren Nockenwellen mit einer Auslegung für den Atkinsonzyklus ermöglicht daher die Erzielung der folgenden Vorteile:
- gute Eigenschaften im Fremdzündungs-Modus;
- Modifikation der Zeitsteuerungen der Einlaß- und Auslaßventile;
- Erzeugung hoher interner Abgasrückführungen;
- Betrieb bei hohen Kompressionsverhältnissen.

## Patentansprüche

1. Viertakt-Ottomotor mit mindestens einer Nockenwelle für die Einlaßventile und mindestens einer Nockenwelle für die Auslaßventile, wobei die Nokkenwellen jeweils eine Verstelleinrichtung zur Phasenverschiebung enthalten,
wobei dieser derart ausgebildet ist, daß dieser im Zustand der Spätverstellung der Einlaß-Nockenwelle im Atkinsonzyklus arbeitet, bei dem das Expansionsverhältnis größer als das Kompressionsverhältnis ist,
**dadurch gekennzeichnet, daß**
dieser eine Motorsteuerung aufweist, durch welche der Viertakt-Ottomotor bei geringer Belastung mit Spätverstellung der Auslassventile, Frühverstellung der Einlassventile, und kontrollierter Selbstzündung betrieben wird.

2. Viertakt-Ottomotor nach Anspruch 1,
**dadurch gekennzeichnet, daß**
dieser derart ausgebildet ist, daß im Zustand der Spätverstellung der Nokkenwelle der Einlaßventile diese spät geschlossen werden, vorzugsweise bei ca. 60° bis 80° Kurbelwellenwinkel nach dem unteren Totpunkt des Kolbens.

3. Viertakt-Ottomotor nach Anspruch 1 oder 2,
**dadurch gekennzeichnet, daß**
im Zustand der Spätverstellung der Nockenwelle der Einlaßventile diese in der Nähe des oberen Totpunktes (TDC) des Kolbens geöffnet werden.

4. Viertakt-Ottomotor nach einem der Ansprüche 1 bis 3,
**dadurch gekennzeichnet, daß**
dieser derart ausgebildet ist, daß dieser bei hohen Drehzahlen einen verringerten Füllungsgrad aufweist, wobei insbesondere der Hub und/oder der Durchmesser des Einlaßventils reduziert, die Länge und/oder der effektive Durchmesser des Einlaßkanals reduziert, der effektive Durchmesser des Turboladerlaufrades reduziert und/oder das Einlaßventil maskiert ist.

5. Viertakt-Ottomotor nach einem der Ansprüche 1 bis 4,
**dadurch gekennzeichnet, daß**
er ein Abgasrückführungssystem aufweist.

6. Viertakt-Ottomotor nach einem der Ansprüche 1 bis 5,
**dadurch gekennzeichnet, daß**
dieser eine Motorsteuerung aufweist, welche mit den Verstelleinrichtungen der Nockenwellen gekoppelt und dazu eingerichtet ist, durch Veränderung der Phasenverschiebung der Nockenwellen den Motor wahlweise in einem Atkinsonzyklus mit Funkenzündung oder mit kontrollierter Selbstzündung zu betreiben.

7. Verfahren zur Steuerung eines Viertakt-Ottomotors nach einem der Ansprüche 1 bis 6,
**dadurch gekennzeichnet, daß**
der Viertakt-Ottomotor bei hoher Motorbelastung und vorzugsweise weit geöffneter Drosselklappe im Atkinsonzyklus mit verzögertem Schließen des Einlaßventils und Funkenzündung betrieben wird.

8. Verfahren nach Anspruch 7,
**dadurch gekennzeichnet, daß**
der Viertakt-Ottomotor bei mittlerer Belastung mit Funkenzündung und Frühverstellung der Einlaßventile und Spätverstellung der Auslaßventile betrieben wird.

9. Verfahren nach Anspruch 7,
**dadurch gekennzeichnet, daß**
der Viertakt-Ottomotor bei mittlerer Belastung mit Spätverstellung der Einlaßventile und der Auslaßventile und mit Funkenzündung betrieben wird.

10. Verfahren nach einem der Ansprüche 7 bis 9,
**dadurch gekennzeichnet, daß**
während eines Betriebs mit kontrollierter Selbstzündung zusätzlich eine exteme Abgasrückführung vorgenommen wird.

## Claims

1. Four-stroke Otto engine with at least one camshaft for the inlet valves and at least one camshaft for the exhaust valves, the camshafts each including an adjusting device for phase shifting,
said four-stroke Otto engine being designed in such a way that, in the retarded state of the inlet camshaft, it operates according to the Atkinson cycle in which the expansion ratio is higher than the compression ratio,
**characterized in that**
said four-stroke Otto engine has an engine control system, by means of which, at low loading, the four-stroke Otto engine is operated with the exhaust valves retarded and the inlet valves advanced and with controlled autoignition.

2. Four-stroke Otto engine according to Claim 1,
**characterized in that**
it is designed in such a way that, in the retarded state of the camshaft of the inlet valves, these valves are closed late, preferably at about 60° to 80° of crankshaft angle after bottom dead centre of the piston.

3. Four-stroke Otto engine according to Claim 1 or 2, **characterized in that**,
in the retarded state of the camshaft of the inlet valves, these valves are opened close to top dead centre (TDC) of the piston.

4. Four-stroke Otto engine according to any of Claims 1 to 3,
**characterized in that**
it is designed in such a way that, at high engine speeds, it has a reduced filling ratio, with, in particular, the lift and/or the diameter of the inlet valve being reduced, the length and/or the effective diameter of the inlet duct being reduced, the effective diameter of the turbocharger rotor being reduced and/or the inlet valve being masked.

5. Four-stroke Otto engine according to any of Claims 1 to 4,
**characterized in that**
it has an exhaust gas recirculation system.

6. Four-stroke Otto engine according to any of Claims 1 to 5,
**characterized in that**
it has an engine control system which is coupled to the adjusting devices for the camshafts and is set up to operate the engine either according to an Atkinson cycle with spark ignition or with controlled autoignition by changing the phase shift of the camshafts.

7. Method for controlling a four-stroke Otto engine according to any of Claims 1 to 6,
**characterized in that**,
at high engine loading and, preferably, with the throttle valve wide open, the four-stroke Otto engine is operated according to the Atkinson cycle with retarded closure of the inlet valve and spark ignition.

8. Method according to Claim 7,
**characterized in that**,
at medium loading, the four-stroke Otto engine is operated with spark ignition, with the inlet valves advanced and the exhaust valves retarded.

9. Method according to Claim 7,
**characterized in that**,
at medium loading, the four-stroke Otto engine is operated with the inlet valves and the exhaust valves retarded and with spark ignition.

10. Method according to any of Claims 7 to 9,
**characterized in that**,
during operation with controlled autoignition, external exhaust gas recirculation is performed in addition.

## Revendications

1. Moteur à quatre temps à allumage par étincelle comprenant au moins un arbre à cames pour les soupapes d'admission et au moins un arbre à cames pour les soupapes d'échappement, les arbres à cames contenant chacun un dispositif de réglage pour le déphasage,
celui-ci étant réalisé de telle sorte qu'il fonctionne dans un cycle d'Atkinson dans l'état de réglage au retard de l'arbre à cames d'admission, dans lequel le rapport de détente est supérieur au rapport de compression,
**caractérisé en ce que**
celui-ci présente une commande de moteur qui permet de faire fonctionner le moteur à quatre temps à allumage par étincelle avec une faible charge avec un réglage au retard des soupapes d'échappement, un réglage à l'avance des soupapes d'admission et un auto-allumage contrôlé.

2. Moteur à quatre temps à allumage par étincelle selon la revendication 1,
**caractérisé en ce que**
celui-ci est réalisé de telle sorte que dans l'état de réglage au retard de l'arbre à came des soupapes d'admission, celles-ci soient fermées avec un retard, de préférence pour un angle du vilebrequin d'environ 60° à 80° après le point mort bas du piston.

3. Moteur à quatre temps à allumage par étincelle selon la revendication 1 ou 2,
**caractérisé en ce que**
dans l'état du réglage au retard de l'arbre à cames des soupapes d'admission, celles-ci sont ouvertes à proximité du point mort haut (PMH) du piston.

4. Moteur à quatre temps à allumage par étincelle selon l'une quelconque des revendications 1 à 3,
**caractérisé en ce que**
celui-ci est réalisé de telle sorte que pour des régimes élevés, il présente un degré de remplissage réduit, la course et/ou le diamètre de la soupape d'admission étant notamment réduit, la longueur et/ou le diamètre effectif du canal d'admission étant réduit, le diamètre effectif du rotor du turbocompresseur étant réduit et/ou la soupape d'admission étant masquée.

5. Moteur à quatre temps à allumage par étincelle selon l'une quelconque des revendications 1 à 4,
**caractérisé en ce**
**qu'**il présente un système de recirculation des gaz d'échappement.

6. Moteur à quatre temps à allumage par étincelle selon l'une quelconque des revendications 1 à 5,
**caractérisé en ce**
**qu'**il présente une commande de moteur qui est accouplée aux dispositifs de réglage des arbres à came et qui est prévue pour faire fonctionner le moteur de manière sélective dans un cycle d'Atkinson avec allumage par étincelle ou avec auto-allumage contrôlé, par modification du déphasage des arbres à cames.

7. Procédé de commande d'un moteur à quatre temps à allumage par étincelle selon l'une quelconque des revendications 1 à 6,
**caractérisé en ce que**
le moteur à quatre temps à allumage par étincelle, dans le cas d'une forte sollicitation du moteur et de préférence d'un papillon largement ouvert, fonctionne en cycle d'Atkinson avec une fermeture retardée de la soupape d'admission et un allumage par étincelle.

8. Véhicule selon la revendication 7,
**caractérisé en ce que**
le moteur à quatre temps à allumage par étincelle, en cas de sollicitation moyenne, fonctionne avec allumage par étincelle et réglage à l'avance des soupapes d'admission et réglage au retard des soupapes d'échappement.

9. Procédé selon la revendication 7,
**caractérisé en ce que**
le moteur à quatre temps à allumage par étincelle, en cas de sollicitation moyenne, fonctionne avec un réglage au retard des soupapes d'admission et des soupapes d'échappement et avec un allumage par étincelle.

10. Procédé selon l'une quelconque des revendications 7 à 9,
**caractérisé en ce que**
pendant un fonctionnement avec auto-allumage contrôlé, une recirculation externe des gaz d'échappement est effectuée.
